Europäisches Patentamt

(19) European Patent Office  (11) Publication number: **0 014 101**

Office européen des brevets  **B1**

(12) **EUROPEAN PATENT SPECIFICATION**

(45) Date of publication of patent specification: **30.03.83**  (51) Int. Cl.³: **B 62 L 1/00, F 16 D 55/224**

(21) Application number: **80300237.7**

(22) Date of filing: **25.01.80**

(54) Disc brakes.

(30) Priority: **27.01.79 JP 8232/79**
**29.05.79 JP 65529/79**
**29.05.79 JP 71322/79**
**29.05.79 JP 71323/79**
**29.05.79 JP 71324/79**
**06.06.79 JP 75926/79**

(43) Date of publication of application:
**06.08.80 Bulletin 80/16**

(45) Publication of the grant of the patent:
**30.03.83 Bulletin 83/13**

(84) Designated Contracting States:
**DE FR GB**

(56) References cited:
**DE - A - 2 617 241**
**DE - B - 1 267 041**
**FR - A - 1 307 621**
**FR - A - 1 315 950**
**FR - A - 2 007 791**
**FR - A - 2 131 489**
**FR - A - 2 260 028**
**FR - A - 2 260 029**

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **Kawaguchi, Takeshi**
**2-25-7, Yamamuro**
**Fujimi-shi Saitama (JP)**

(74) Representative: **MacFarlane, John Anthony Christopher et al,**
**HASELTINE LAKE & CO. Hazlitt House 28,**
**Southampton Buildings Chancery Lane**
**London WC2A 1AT (GB)**

(56) References cited:
**FR - A - 2 289 389**
**FR - A - 2 306 370**
**FR - A - 2 321 073**
**FR - E - 81 127**
**US - A - 3 817 342**

Courier Press, Leamington Spa, England

## Disc brakes

This invention relates to disc brakes for motorcycles and other two-wheeled vehicles.

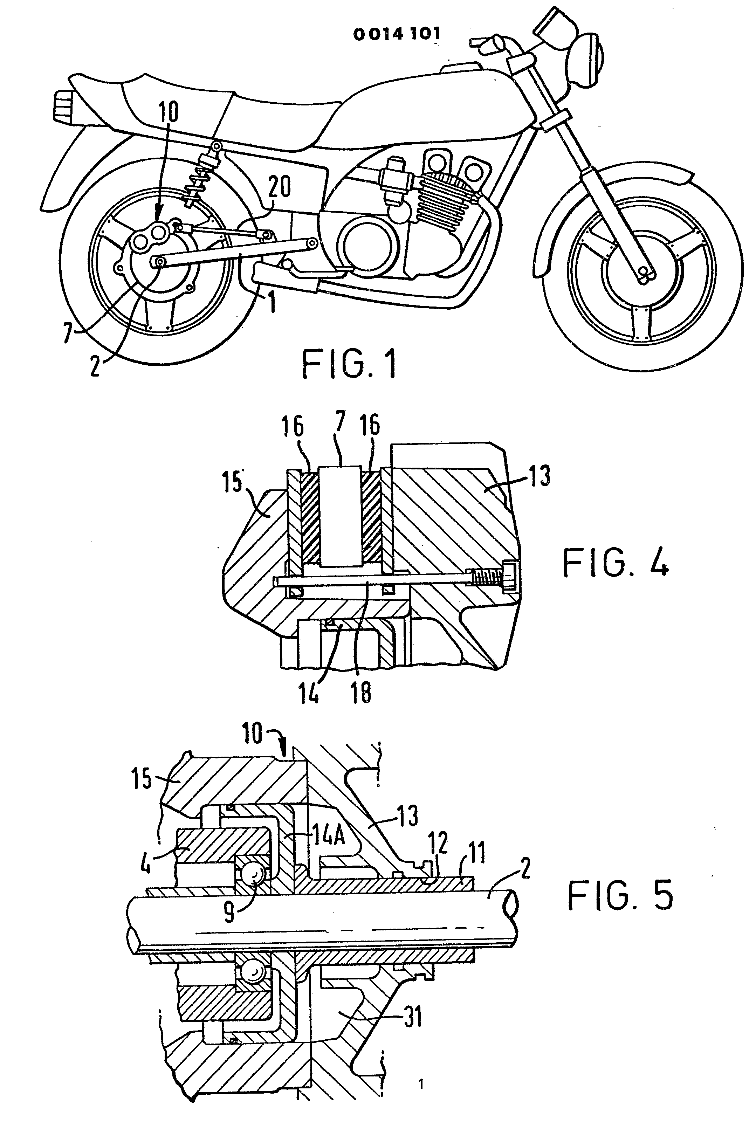

It has been proposed to provide rotatably on one end portion of an axle a wheel hub having a peripheral brake disc and with a central hollow shaft supported on the axle; and to provide on the other end portion of the axle a brake caliper assembly with the axle inserted in a central bore of this assembly, the caliper assembly being supported on the axle only at a place near one side of the assembly. In such a construction, whereas the caliper assembly is supported only near one side, external force from the brake disc during braking operation acts on the caliper assembly at a place near its other side, thus involving the disadvantage that twisting can easily develop and stable braking operation is difficult to obtain. Twisting is combated in the construction disclosed in French Patent Specification No. 2,007,791 in which there is a disc brake assembly comprising a brake disc (16) peripherally carried by the hub (7, 8) of the wheel to be braked and a brake caliper assembly (see Figure 1), the hub and caliper assembly being mounted side by side on an axle 1 for the wheel with the axle passing through a central hollow shaft of the hub and through a central bore of the caliper assembly. A sleeve (20) having a splined engagement (21, 22) with the caliper assembly provides continuous support for the caliper assembly between two places, one of which is located within the plane of the brake disc. As the sleeve (20) and a hub bearing (3) are located side by side on the axle 1, the hub and caliper assembly requires a large horizontal space along the axle 1 and also a large central opening within the hub.

According to the present invention there is provided a disc brake assembly comprising a brake disc peripherally carried by the hub of the wheel to be braked, and a brake caliper assembly, the hub and the caliper assembly being mounted side-by-side on an axle for the wheel with the axle passing through a central hollow shaft of the hub and through a central bore of the caliper assembly, and with the caliper assembly supported from the axle at two places that are relatively widely distanced apart; characterised in that at said one of said two places the caliper assembly is supported by a supporting member that is barrel-shaped so as to support the caliper assembly at a zone that contains a bearing that supports the shaft of the wheel hub on the axle, whereby the space occupied by the hub and the caliper assembly in the direction along the axle is minimised. As in this construction the brake caliper assembly is supported at two places that are relatively widely distanced apart, the assembly is stably supported in a manner to resist twisting during braking. The stable support can be enhanced in various ways as will be described hereinbelow.

Furthermore, the horizontal space required along the axle is minimised.

It has also been previously proposed to provide rotatably on one end portion of an axle a wheel hub having a peripheral brake disc and with a central hollow shaft supported on the axle; to provide on the other end portion of the axle a brake caliper assembly with the axle inserted in a central bore of the caliper assembly; and to couple the caliper assembly with the frame of the motorcycle or other vehicle through a torque link extending substantially tangentially of the brake disc. The caliper assembly is slidable on the axle in proportion to wear on each brake pad opposing the disc, and it is preferable that the torque link should be able smoothly to follow this movement of the caliper assembly. To achieve this, as will be made clear hereinafter, the present invention further provides, in a disc brake assembly as already defined, a torque link for connection between the brake caliper assembly and a member of the frame of a vehicle in which the disc brake assembly is to be fitted, the disc brake assembly being further characterised in that a resilient bush including an intermediate rubber layer is provided at each end of the torque link, the torque link being connected to the caliper assembly and to the vehicle frame member via these resilient bushes.

In addition in a disc brake assembly as already defined, and in which the caliper assembly includes outer and inner caliper members, the invention provides that the outer caliper member includes a portion formed as an annular cover for the inner caliper member and the brake disc and pads of the disc brake assembly. Preferably, in this case, the annular cover co-operates with an annular flange carried by the inner caliper member to form a labyrinth seal zone.

Furthermore provision can be made for the brake caliper assembly of the disc brake assembly to contain lubricating medium.

For a better understanding of the invention and to show how the same may be carried into effect, reference will now be made, by way of example, to the accompanying drawings, in which:—

Figure 1 is a somewhat schematic side view of a motorcycle,

Figure 2 is a side view, partly cut away and in section and drawn to a larger scale, of a disc brake assembly and associated components of the motorcycle of Figure 1,

Figure 3 is a sectional view taken on the line III—III in Figure 2,

Figure 4 is a detail sectional view taken on the line IV—IV in Figure 2, and

Figures 5 to 8 are sectional side views each of part of a disc brake assembly and associated components as shown in Figure 3 but illustrating different forms.

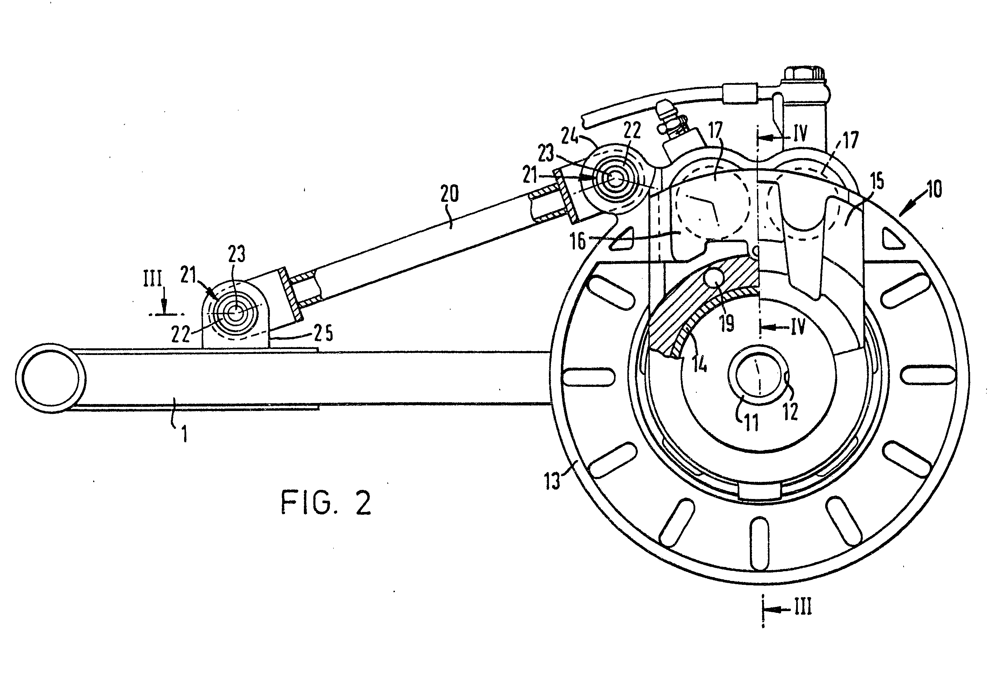

Referring first to Figures 1 to 4 of the drawings, in the region of the rear wheel of the motorcycle (or other two-wheeled vehicle), the frame includes a rear fork member 1 supporting one end of the rear wheel axle 2. A rear wheel hub 3 having a central hollow shaft 4 is provided with a sprocket 5 on its periphery and a further sprocket 6 at one end. An annular brake disc 7 is fixed to the hub 3 by bolts and nuts 8. The hollow shaft 4 is supported on the axle 2 by a pair of ball bearings 9, 9.

A brake caliper assembly 10 is supported loosely on the axle 2 by a collar 11 entered in a central bore 12 in an outer caliper member 13 of the assembly, the collar 11 being fixedly held between the end of the rear fork member 1 and the ball bearing 9 opposed thereto. A barrel-shaped supporting member 14 extending inwards from the inner end of the collar 11 is practically in contact with an inner caliper member 15 of the caliper assembly so as to support it from its inner peripheral surface at a zone that contains the ball bearing 9 adjacent the member 14/collar 11.

The two caliper members 13, 15 carry at least one pair of brake pads 16, 16 on surfaces opposed to the disc 7, and a caliper piston 17 that acts on one of the pads 16, 16. By advancing movement of the piston 17 the two pads 16, 16 are caused to close to grip the disc 7 therebetween in conventional fashion. The pads 16, 16 are located by a pin 18, and bolts 19 secure the two caliper members 13, 15 to each other.

Between the disc brake assembly components so far described and a part of the rear fork member 1 remote from the components there extends a torque link 20, disposed substantially tangentially of the brake disc 7. Each end of this torque link 20 is supported, via a bush 21, on a pin 23, each bush 21 being composed of two rigid layers with a rubber layer 22 therebetween so that a resilient bush is formed as a whole. At the brake end the pin 23 is secured in a lug 24 projecting from the caliper assembly 10. At the rear fork member end the pin 23 is secured in a lug 25 extending from the form member 1.

The components so far described operate as follows. By closing the two pads 16, 16 as a result of advancing movement of the caliper piston 17, the brake disc 7 is gripped from both sides to effect braking. Braking torque generated therefrom is transmitted through the torque link 20 to the rear fork and therefore to the frame of the motocycle, all in a manner as previously proposed. However, in the present construction as each pad 16 becomes worn, and the caliper assembly 10 moves on the axle 2 correspondingly to compensate for this wear, in which case the torque link 20 tends to oscillate somewhat laterally, such oscillation is absorbed by the rubber layers 22 of the bushes 21 and hence the torque link 20 is able smoothly to follow this movement of the caliper assembly 10.

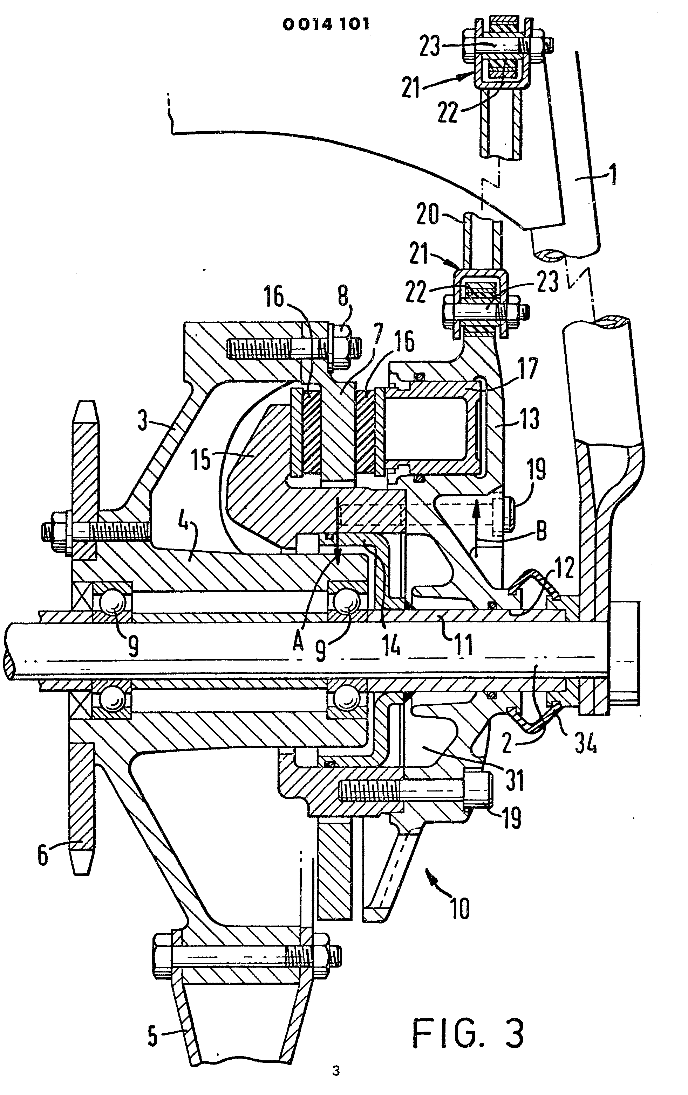

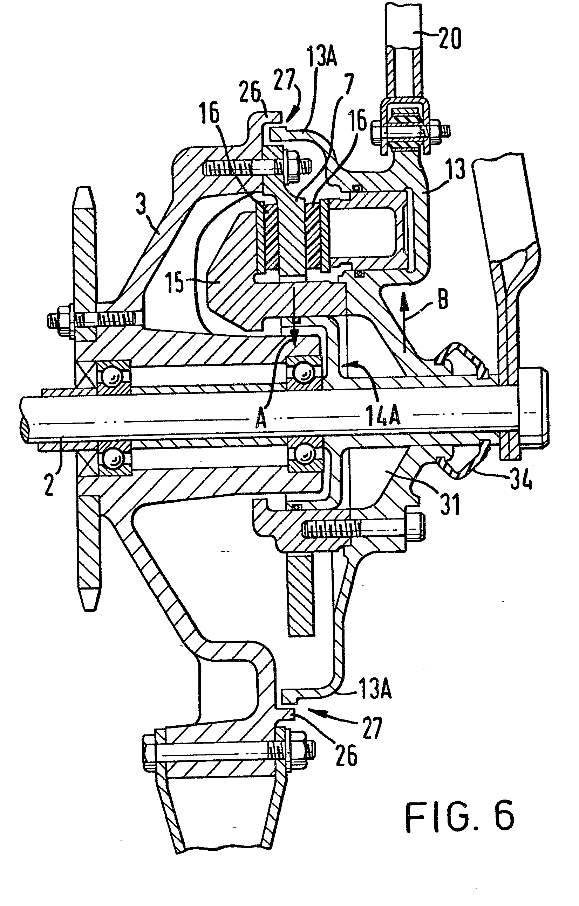

As has already been described, the caliper assembly 10 has between its two caliper members 13, 15, the barrel-shaped supporting member 14. As shown in Figure 3, this member 14 has the collar 11 inserted in its central bore and is fixed thereto by welding or some other means. As an alternative, a supporting member 14A as illustrated in Figure 5 can be mounted directly on the axle 2 (entered in the central bore of the supporting member), the member 14A being held between the collar 11 and the adjacent ball bearing 9. In either case, in operation as the two pads 16, 16 are operated to brake the wheel hub, during such operation the brake caliper assembly 10 is supported at its central bore 12 on one side by the axle 2 at a zone that has a radial plane common with the zone at which the torque link 20 is connected to the assembly 10, and at an internal peripheral surface on the other side by the supporting member 14 or 14A at a zone that has a radial plane common with the brake disc 7. Forces acting on the caliper assembly 10 during braking are a braking force A developed at the brake disc 3 and a reaction force B developed at the connection with the torque link 20, but as the two places at which the assembly 10 is supported, and which are relatively widely distanced apart, are respectively in line with, or substantially in line with, the points at which the lines of application of these forces A and B pass through the axle 2, the assembly 10 is held stably. This is also the case in the form shown in Figure 6 in which the outer caliper member 13 includes a portion formed as an annular cover for other parts of the disc brake assembly, the radially outer peripheral part of the caliper member 13 terminating in an inwardly directed flange 13A that terminates in overlapping relationship with an annular flange 26 projecting outwardly from the wheel hub 3, so that a labyrinth seal zone 27 is provided where the flanges 13A and 26 overlap one another. The inner caliper member 15, the brake disc 7 and the brake pads 16, 16 are all contained within this zone 27 and hence are protected from muddy water and the like, whereby the service life of the disc and the pads tends to be lengthened.

It is also to be noted that in this form the collar 11 and supporting member 14 are replaced by a one-piece collar and support 14A having, overall, effectively the same configuration as the collar 11 and supporting member 14 taken together.

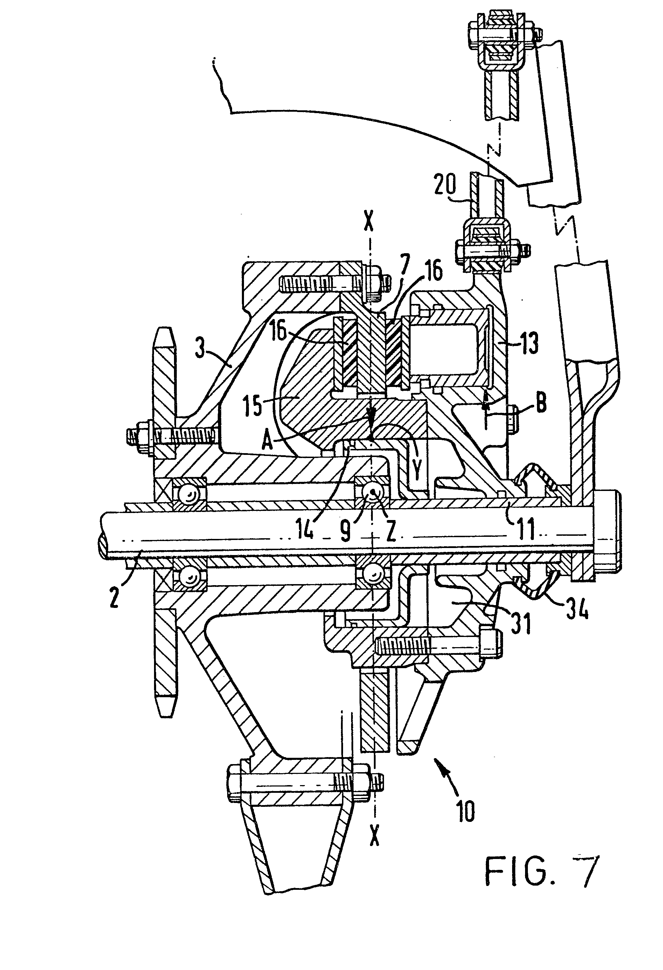

The problem of twisting occurring in operation has already been discussed above, and it has been described how, in the brake caliper assemblies so far described with reference to the accompanying drawings, to resist twisting, support is provided at two places that are relatively widely distanced apart. Further to improve the support of the caliper assembly 10, in the form shown in Figure 7, the ball bearing member 9 nearest the collar 11, the zone at which the support member 14 supports the inner caliper member 15, and the brake disc 7 are disposed so as to have a common radial plane X—X that passes through the centre of the brake disc 2 and substantially through the centres of the zone at which the support member 14 supports the inner caliper member 15 (see point Y in Figure 7) and of the bearing member 9 nearest the collar 11 (point Z). In braking operation, friction force (the braking force A) generated between the disc 2 and the pads 16, 16 acts on the bearing member 9 nearest the collar 11 through the wheel hub 3 so far as the disc 2 side is concerned, and as there is no overhanging relationship between the disc 2 and the bearing member 9 there is no moment increase in this force and the bearing member 9 gives stable support without the occurrence of twist. Similarly, and as already discussed, as the braking force A acts on the support member 14 through the inner caliper member 15 so far as the pads 16, 16 side is concerned, and as the point Y is substantially co-planar with the centre of the disc 2, no moment increase in force occurs, so that no twist is produced.

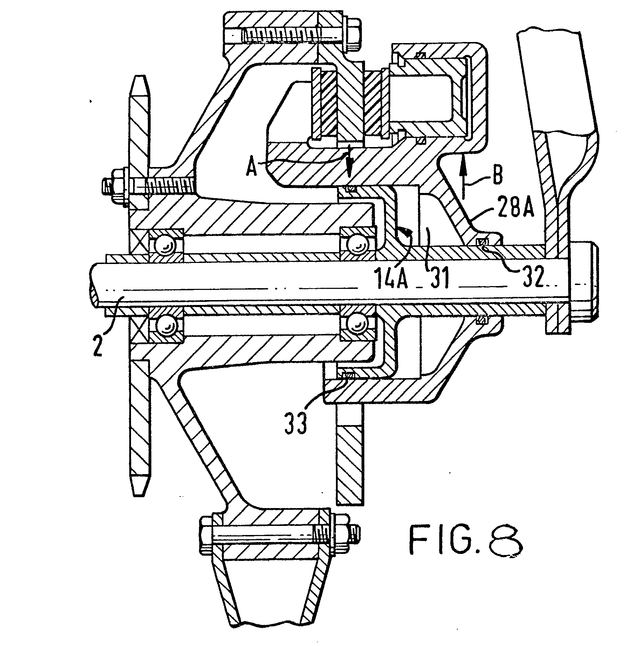

Finally, in the form shown in Figure 8 there is only a single caliper member 28A. Support for this member utilises the one-piece collar and support member 14A of the form of Figure 6. Between this member 14A and the caliper member 28A there is a chamber 31 that is filled with grease or other lubricant, this chamber being sealed at each end by an O-ring seal 32 or 33. Similar chambers 31 that can be filled with grease are provided in the forms of Figures 3, 5, 6 and 7 and Figures 3, 6 and 7 also illustrate a sealing boot 34 that can be fitted in addition to the O-ring seal 32 (Figures 3 and 7) or instead of the seal 32 (Figure 6).

In operation, the grease in the chamber 31 lubricates the sliding surfaces on which the brake caliper assembly is supported.

## Claims

1. A disc brake assembly comprising a brake disc (7) peripherally carried by the hub (3) of the wheel to be braked, and a brake caliper assembly, the hub (3) and the caliper assembly (10) being mounted side-by-side on an axle (2) for the wheel with the axle passing through a central hollow shaft (4) of the hub and through a central bore of the caliper assembly, and with the caliper assembly (10) supported from the axle at two places that are relatively widely distanced apart; characterised in that at said one of said two places the caliper assembly (10, 10A) is supported by a supporting member (14) that is barrel-shaped so as to support the caliper assembly at a zone that contains a bearing (9) that supports the shaft (4) of the wheel hub (3) on the axle (2), whereby the space occupied by the hub and the caliper assembly in the direction along the axle is minimised.

2. A disc brake assembly as claimed in claim 1 and further characterised in that said bearing (9), said zone and the brake disc (7) of the brake assembly have a common plane that is radial of the axle (2).

3. A disc brake assembly as claimed in claim 1 or 2 and further comprising a torque link (20) for connection between the brake caliper assembly (10) and a member of the frame of a vehicle in which the disc brake assembly is to be fitted; the disc brake assembly being further characterised in that a resilient bush (21) including an intermediate rubber layer (22) is provided at each end of the torque link (20), the torque link being connected to the caliper assembly and to the vehicle frame member (1) via these resilient bushes.

4. A disc brake assembly as claimed in any one of claims 1 to 3, and further characterised in that the caliper assembly includes a chamber (31) for containing lubricating medium between said two places at which the caliper assembly is supported from the axle.

5. A disc brake assembly as claimed in any one of claims 1 to 4, wherein the caliper assembly includes outer and inner caliper members; further characterised in that the outer caliper member (13) includes a portion formed as an annular cover for the inner caliper member (15) and the brake disc (7) and pads (16, 16), of the disc brake assembly.

6. A disc brake assembly as claimed in claim 5 and further characterised in that the annular cover co-operates with an annular flange (26) carried by the inner caliper member to form a labyrinth seal zone (27).

## Revendications

1. Ensemble de frein à disque qui comprend un disque de frein (7) porté périphériquement par le moyeu (3) de la roue devant être freinée, un ensemble d'étrier de frein (10), le moyeu (3) et l'ensemble d'étrier (10) étant montés côte à côte sur un essieu (2) pour la roue, l'essieu passant dans un arbre creux central (4) du moyeu et dans une ouverture centrale de l'ensemble d'étrier, cet ensemble d'étrier (10) étant supporté par l'essieu à deux emplacements qui sont relativement largement espacés; caractérisé en ce que, à l'un de ces deux emplacements, l'ensemble d'étrier (10) est supporté par un organe de support (14) qui a la forme d'une cloche de façon à supporter l'ensemble d'étrier dans une zone qui contient un palier (9) qui supporte l'arbre (4) du moyeu (3) de la roue sur l'essieu (2), ce qui fait que l'espace occupé par le moyeu et l'ensemble d'étrier dans la direction longitudinale de l'essieu est réduit à un minimum.

2. Ensemble de frein à disque selon la revendication 1 et qui est en outre caractérisé en ce que ledit palier (9), ladite zone et ledit disque de frein (7) ont un plan commun qui est radial par rapport à l'essieu (2).

3. Ensemble de frein à disque selon la revendications 1 ou 2, et qui comprend en outre une barre de torsion (20) établissant une liaison entre l'ensemble d'étrier de frein (10) et un organe du châssis du véhicule sur lequel l'ensemble de frein à disque doit être monté, l'ensemble de frein à disque étant, en outre, caractérisé en ce qu'un coussinet élastique (21) comportant une couche intermédiaire de caoutchouc (22) est prévu à chaque extrémité de la barre de torsion (20), cette dernière étant reliée à l'ensemble d'étrier et à l'organe (1) du châssis du véhicule par l'intermédiaire de ces coussinets élastiques.

4. Ensemble de frein à disque selon l'une quelconque des revendications 1 à 3 et qui est caractérisé en outre en ce que l'ensemble d'étrier comporte une chambre 31 pour contenir un lubrifiant entre lesdits deux emplacements auxquels l'ensemble d'étrier est supporté par l'essieu.

5. Ensemble de frein à disque selon l'une quelconque des revendications 1 à 4, et où l'ensemble d'étrier comporte un organe extérieur et un organe intérieur, caractérisé en outre en ce que l'organe d'étrier extérieur (13) comporte une partie formant un couvercle annulaire pour l'organe d'étrier intérieur (15), le disque de frein (7) et les garnitures (16, 16) de l'ensemble de frein à disque.

6. Ensemble de frein à disque selon la revendication 5 et qui est caractérisé en outre en ce que le couvercle annulaire coopère avec une bordure annulaire (26) portée par l'organe d'étrier intérieur pour former une zone de joint à labyrinthe (27).


**Patentansprüche**

1. Scheibenbremsanordnung mit einer am Umfang durch die Nabe (3) des zu bremsenden Rades getragenen Bremsscheibe (7) und einem Bremsengehäuse (10), worin die Nabe (3) und das Bremsengehäuse (10) Seite an Seite auf einer Achse (2) für das Rad angeordnet sind, die Achse durch eine zentrale Hohlwelle (4) der Nabe und durch eine zentrale Bohrung des Bremsengehäuses hindurchgeführt ist und das Bremsengehäuse (10) gegenüber der Achse an zwei voneinander einen relativ großen Abstand besitzenden Stellen gegenüber der Achse abgestützt ist, dadurch gekennzeichnet, daß das Bremsengehäuse (10, 10A) an einer der beiden Stellen durch einen topfförmigen Stützteil (14) in solcher Weise abgestützt ist, daß das Bremsengehäuse in einem Bereich abgestützt wird, welcher ein die Welle (4) der Radnabe (3) auf der Achse (2) abstützendes Lager (9) enthält, wodurch der von der Nabe und dem Bremsengehäuse in Richtung der Achse beanspruchte Raum verringert wird.

2. Scheibenbremsanordnung nach Anspruch 1, dadurch gekennzeichnet, daß das Lager (9), der Bereich und die Bremsscheibe (7) der Scheibenbremsanordnung eine sich radial zur Achse (2) erstreckende gemeinsame Ebene haben.

3. Scheibenbremsanordnung nach Anspruch 1 oder 2, welche zusätzlich ein Drehmomentglied (20) aufweist, welches das Bremsengehäuse (10) und einen Teil des Rahmens eines mit der Scheibenbremsanordnung auszustattenden Fahrzeuges verbindet, dadurch gekennzeichnet, daß eine eine Zwischenschicht (22) aus Gummi aufweisende Büchse (21) an jedem Ende des Drehmomentgliedes vorgesehen ist und das Drehmomentglied über diese elastischen Büchsen mit dem Bremsengehäuse und dem Teil (1) des Fahrzeugrahmens verbunden ist.

4. Scheibenbremsanordnung nach irgendeinem der Ansprüche 1 bis 3, dadurch gekennzeichnet, daß das Bremsengehäuse zwischen jenen zwei Stellen, an welchen das Bremsengehäuse gegenüber der Achse abgestützt ist, eine ein Schmiermittel enthaltende Kammer (31) aufweist.

5. Scheibenbremsanordnung nach irgendeinem der Ansprüche 1 bis 4, worin das Bremsengehäuse einen äußeren Gehäuseteil und einen inneren Gehäuseteil aufweist, dadurch gekennzeichnet, daß der äußere Gehäuseteil (13) einen als ringförmiger Deckel für den inneren Gehäuseteil (15) und die Bremsscheibe (7) und die Bremsklötze (16, 16) der Scheibenbremsanordnung ausgebildeten Abschnitt aufweist.

6. Scheibenbremsanordnung nach Anspruch 5, dadurch gekennzeichnet, daß der ringförmige Deckel zwecks Ausbildung einer Labyrinthdichtungszone (27) mit einem vom inneren Bremsengehäuseteil getragenen ringförmigen Flansch (26) zusammenwirkt.

0014 101

FIG. 1

FIG. 4

FIG. 5

FIG. 2

FIG. 3

FIG. 6

4

FIG. 7

FIG. 8